# EUROPEAN PATENT SPECIFICATION

(11) **EP 1 275 617 B1**
(45) Date of publication and mention of the grant of the patent: **07.02.2007**
(21) Application number: 02014973.8
(22) Date of filing: 09.07.2002
(51) Int. Cl.: C01F 7/02, C01F 7/46

(54) **Method for producing aluminum hydroxide**
Verfahren zur Herstellung von Aluminiumhydroxid
Procédé de fabrication d'hydroxyde d'aluminium

(30) Priority: 11.07.2001 JP 2001210855
(43) Date of publication of application: 15.01.2003
(73) Proprietor: Sumitomo Chemical Company, Limited, Tokyo 104-8260 (JP)
(72) Inventor: Kato, Hisakatsu, Niihama-shi, Ehime (JP); Eguchi, Naoyuki, Niihama-shi, Ehime (JP); Takeuchi, Kiyoshi, Niihama-shi, Ehime (JP)
(74) Representative: Vossius & Partner

(56) References cited:
- EP-A- 0 997 435
- WO-A-01/28926
- US-A- 4 650 653
- PATENT ABSTRACTS OF JAPAN vol. 1995, no. 07, 31 August 1995 (1995-08-31) & JP 07 101723 A (SUMITOMO CHEM CO LTD), 18 April 1995 (1995-04-18)
- PATENT ABSTRACTS OF JAPAN vol. 016, no. 581 (C-1012), 21 December 1992 (1992-12-21) & JP 04 231323 A (SHOWA DENKO KK), 20 August 1992 (1992-08-20)

## Description

The present invention relates to an aluminum hydroxide with high brightness and a method for producing such an aluminum hydroxide.

Aluminum hydroxide is used in a large amount, for example, for various pharmaceuticals, artificial marble, dentifrice, coating materials for papermaking, flame retardant fillers and raw materials for alumina production. From the viewpoint of applications thereof, there is a demand for an aluminum hydroxide having low colorability and excellent brightness. Many methods for producing aluminum hydroxide are known. However, aluminum hydroxides obtained by the conventional methods contain various kinds of impurities such as organic coloring components and silica and, therefore, are unsatisfactory in purity and brightness.

For example, JP-A-4-231323 discloses a method for producing an aluminum hydroxide in which all the aluminum hydroxide to be used as a raw material is dissolved in an alkaline solution such as an aqueous solution of sodium aluminate at high temperature under high pressure, impurities are removed and then aluminum hydroxide is precipitated. The aluminum hydroxide obtained by this method, however, tends to contain impurities because primary particles thereof are small and tend to agglomerate. Therefore, it is difficult to obtain an aluminum hydroxide having high purity and high brightness by this method.

An object of the present invention is to provide an aluminum hydroxide having high purity with high brightness and a method for producing such an aluminum hydroxide.

This object was achieved on the basis of the finding that it is preferred, in order to obtain an aluminum hydroxide having large primary particles thereof, that all the aluminum hydroxide as a raw material is not allowed to dissolve in an alkaline solution but a part of the aluminum hydroxide is allowed to dissolve in the alkaline solution so as to obtain a solid-liquid-coexisting mixture (slurry) thereof in the steps of mixing the aluminum hydroxide with the alkaline solution with heating and then cooling. In this method, nuclei of aluminum hydroxide grow with cooling using a solid in the mixture as nuclei, which results in obtaining an aluminum hydroxide having large primary particles with high purity and high brightness.

The present invention provides a method for producing an aluminum hydroxide, the method comprising:
(i) mixing a crude aluminum hydroxide with an alkaline solution which includes a sodium hydroxide solution or a sodium aluminate solution to obtain a mixture thereof;
(ii) heating the mixture to obtain a slurry in which a solid of aluminum hydroxide is present in an amount of from about 10% by weight to about 90% by weight based on the crude aluminum hydroxide to be used for the mixing;
(iii) cooling the slurry to precipitate an aluminum hydroxide; and
(iv) separating the resulting aluminum hydroxide from the slurry.

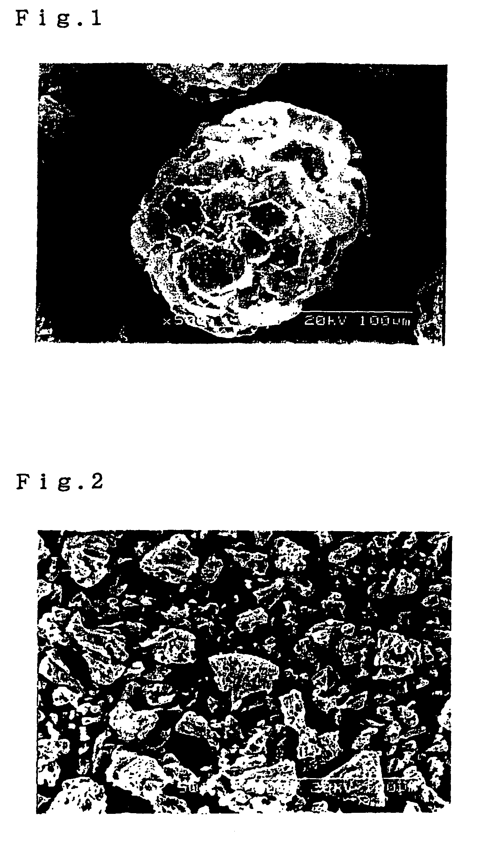

Fig. 1 shows a scanning electromicroscope (SEM) photograph with 500-fold magnification of the aluminum hydroxide powder used as a raw material in Example 1, which is one embodiment of the production method of the present invention;

Fig. 2 shows a SEM photograph with 500-fold magnification of the aluminum hydroxide that was present as a solid in the slurry of the crude aluminum hydroxide in Example 1; and

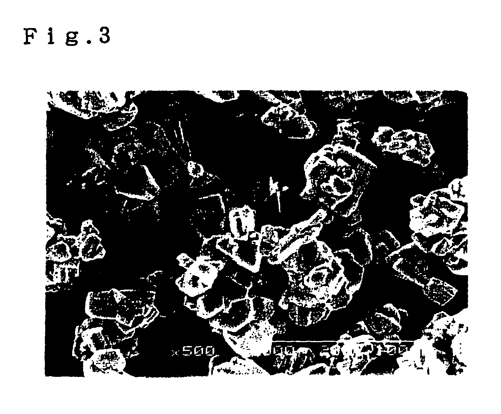

Fig. 3 shows a SEM photograph with 500-fold magnification the aluminum hydroxide powder that was obtained in Example 1.

A method for producing an aluminum hydroxide of the present invention comprises the steps of mixing a crude aluminum hydroxide as a raw material with an alkaline solution to obtain a mixture thereof, and heating the mixture to obtain a slurry in which a solid of aluminum hydroxide is present in an amount of from about 10% by weight to about 90% by weight based on the crude aluminum hydroxide to be used for the mixing.

The aluminum hydroxide to be used as a raw material is not limited. Examples of the aluminum hydroxide include an aluminum hydroxide, the crystal structure of which is the gibbsite type or the bayerite type. Among them, it is preferred to use a gibbsite-type aluminum hydroxide powder, which may be an intermediate for production of metal aluminum, from the viewpoint of being easy to obtain and being inexpensive.

An alkaline solution to be mixed with the crude aluminum hydroxide includes a sodium hydroxide solution or a sodium aluminate solution. From the industrial standpoint, it is preferred to use a sodium aluminate solution. When a sodium aluminate solution is utilized in the present invention, the sodium aluminate solution may have a concentration of sodium compounds in terms of Na₂O ranging from about 100 g/l to about 200 g/l, a concentration of alumina compounds in terms of Al₂O₃ ranging from about 40 g/l to about 132 g/l , and a ratio by mole (Na₂O/Al₂O₃) of the molar amount of sodium compounds in terms of Na₂O to the molar amount of alumina compounds in terms of Al₂O₃ ranging from about 2.5 to about 4.

In mixing a crude aluminum hydroxide with an alkaline solution, the amount of the crude aluminum hydroxide to be used may be an amount such that the amount of alumina compounds in terms of Al₂O₃ ranges from about 60 g to about 260 g based on 1 1 of the alkaline solution.

In the present invention, the mixture obtained above is heated to provide a slurry in which solid aluminum hydroxide is present. The heating may be conducted in the above-described step of mixing the crude aluminum hydroxide with the alkaline solution. In the present invention, a crude aluminum hydroxide and an alkaline solution are mixed with each other and are heated so that the crude aluminum hydroxide is dissolved in part in the alkaline solution and the remaining aluminum hydroxide is present as a solid in the resulting mixture. As a result, a slurry in which solid aluminum hydroxide is present is obtained.

The amount of the solid aluminum hydroxide in the slurry ranges from about 10% by weight to about 90% by weight, and preferably from about 30% by weight to about 70% by weight, based on the crude aluminum hydroxide to be used for the mixing. When the amount of the solid exceeds about 90% by weight, an aluminum hydroxide having low purity and/or low brightness may be obtained. On the other hand, when the amount of the solid is less than about 10% by weight, the production efficiency of the obtained aluminum hydroxide may be adversely reduced, which is undesirable. The heating is preferably carried out so that the crude aluminum hydroxide is dissolved in part in the alkaline solution and the concentration of the alumina compounds dissolved in the alkaline solution becomes an equilibrium concentration.

The heating of the mixture of crude aluminum hydroxide and an alkaline solution can be carried out, for example, in a batch-type dissolution chamber or a continuous dissolution chamber, each of which is equipped with a stirring function. There are no particular limitations in the method of heating. For example, the heating may be carried out so that a pipe made of an alkaliproof material is installed in a dissolution chamber and heated steam is passed through the pipe, or the heating may also be carried out using a heater which is arranged around a dissolution chamber.

The heating is carried out so that the temperature of the resulting slurry becomes not lower than about 80°C and not higher than the boiling point of the alkaline solution. When the heating temperature exceeds the boiling point of the alkaline solution, it may be necessity to use a dissolution chamber with a sealed pressure chamber, which is undesirable. For example, when a sodium aluminate solution with an Na₂O concentration of 155 g/l, an Al₂O₃ concentration of 73 g/l and a molar ratio Na₂O/Al₂O₃ of 3.5 is used, the boiling point of the solution is about 108°C. The heating time varies depending upon the heating temperature. For example, the heating time is not shorter than 10 minutes, preferably not shorter than 30 minutes, and is not longer than 2 hours, preferably not longer than 1 hour.

In the present invention, the slurry obtained above is cooled to precipitate aluminum hydroxide and then the resulting aluminum hydroxide is separated from the slurry. The slurry may be cooled eventually to a temperature not lower than about 40°C and not higher than about 60°C.

It is preferred to carry out the cooling while stirring in a chamber which is equipped with a stirring function. For example, the cooling may be carried out by a method in which the temperature is lowered step by step or continuously. The temperature of the slurry is preferably lowered step by step. When the temperature is lowered step by step, it is preferred to maintain the slurry temperature so that the concentration of alumina compounds dissolved in the alkaline solution becomes an equilibrium concentration at a predetermined temperature in a cooling step and then commence to cool the slurry toward the next predetermined temperature in the cooling step. For example, the cooling may be conducted by a method in which a slurry was cooled down from the above-mentioned temperature at which crude aluminum hydroxide was dissolved in part to a temperature within the range of from about 60°C to about 80°C, the slurry is maintained at that temperature for several or several tens hours, followed by cooling the slurry to a lower temperature, and then the slurry is maintained again at the lower temperature for several or several tens hours, followed further by cooling the slurry to a temperature within the range of about 40°C to about 60°C, which is the final temperature of the slurry.

The cooled slurry may, as needed, be maintained at the final cooling temperature for several or several tens hours, preferably for about 0.5 hour to about 5 hours, to age the aluminum hydroxide which has been precipitated.

In the present invention, a part of the crude aluminum hydroxide used as a raw material is dissolved in an alkaline solution and then cooled. In the cooling step, the dissolved alumina compounds grows to precipitate around the aluminum hydroxide remaining in the form of solid as a nucleus. As a result, an aluminum hydroxide having a high purity and a high brightness (that is, an aluminum hydroxide having a high L value in the Lab index defined by the International Commission on Illumination) is obtained. The obtained aluminum hydroxide may be large primary particles. The aluminum hydroxide may contain sodium compounds in an amount not larger than about 0.25% by weight, preferably not larger than 0.18% by weight, in terms of Na₂O.

According to the method for producing aluminum hydroxide in the present invention, there is no need to heat a mixture comprising a crude aluminum hydroxide and an alkaline solution to high temperature such as the temperature at which the mixture is heated in the conventional methods. Also, in the present invention, the cost of energy required for steam for heating can be reduced.

### EXAMPLES

The present invention is described in more detail by the following Examples, which should not be construed as a limitation upon the scope of the present invention.

In the following Examples, the brightness by Hunter was measured in accordance with JIS P 8123. As the value of brightness by Hunter is higher, the brightness of the measured sample becomes higher.

Into a sodium aluminate solution having a concentration of sodium compounds in terms of Na₂O of 153 g/l, a concentration of alumina compounds in terms of Al₂O₃ of 85 g/l and a ratio by mole Na₂O/Al₂O₃ of 2.96, was added a crude aluminum hydroxide powder (manufactured by Alcoa Kasei Ltd.; trade name "A-30") having an average secondary particle diameter of 100 µm, a concentration of sodium compounds in terms of Na₂O of 0.20% by weight and a brightness by Hunter of 69 in an amount of 185 g per one liter of the sodium aluminate solution. The resulting mixture was heated to 108°C, which is the boiling point of the sodium aluminate solution, and was maintained at the same temperature for 0.5 hour while stirring, thereby obtaining a slurry. The amount of aluminum hydroxide solid contained in the slurry was 40% by weight based on the crude aluminum hydroxide, which had been used as a raw material. A very small fraction of the aluminum hydroxide solid was picked out and the average particle diameter was determined to be about 36 µm. A scanning electromicroscope (SEM) photographs with 500-fold magnification of the crude aluminum hydroxide used as a raw material and of the aluminum hydroxide solid are shown in Figs . 1 and 2, respectively.

The slurry was cooled down to 80°C and then was poured into a precipitation chamber. While stirring, cooling of the slurry was carried out sequentially by cooling to 80°C and maintaining at this temperature for 22 hours, cooling to 70°C and maintaining at this temperature for 24.5 hours, cooling to 60°C and maintaining at this temperature for 24 hours, and cooling to 50°C and maintaining at this temperature for 72 hours, thereby precipitating an aluminum hydroxide. The precipitated aluminum hydroxide was then separated from the slurry. The resulting aluminum hydroxide has an average particle diameter (secondary particle diameter) as large as about 67 µm and an average primary particle diameter as large as 20-30 µm. The aluminum hydroxide has a content of sodium compounds in terms of Na₂O as low as 0.16% by weight and a brightness by Hunter as high as 78.

## Claims

1. A method for producing an aluminum hydroxide, the method comprising:
(i) mixing a crude aluminum hydroxide with an alkaline solution which includes a sodium hydroxide solution or a sodium aluminate solution to obtain a mixture thereof;
(ii) heating the mixture to obtain a slurry in which a solid of aluminum hydroxide is present in an amount of from about 10% by weight to about 90% by weight based on the crude aluminum hydroxide to be used for the mixing;
(iii) cooling the slurry to precipitate an aluminum hydroxide; and
(iv) separating the resulting aluminum hydroxide from the slurry.

2. The method for producing an aluminum hydroxide according to claim 1, wherein the heating is carried out at a temperature not lower than 80°C and not higher than the boiling point of the alkaline solution.

3. The method for producing an aluminum hydroxide according to claim 1 or 2, wherein the alkaline solution has a concentration of sodium compounds in terms of Na₂O of from 100 to 200 g/L, a concentration of alumina compounds in terms of Al₂O₃ of from 40 to 132 g/L and a ratio by mole (Na₂O/Al₂O₃) of from 2.5 to 4.

## Patentansprüche

1. Verfahren zur Herstellung eines Aluminiumhydroxids, wobei das Verfahren umfasst:
(i) Mischen eines rohen Aluminiumhydroxids mit einer Alkalilösung, welche eine Natriumhydroxidlösung oder eine Natriumaluminatlösung einschließt, um ein Gemisch davon zu erhalten;
(ii) Erwärmen des Gemischs, um eine Aufschlämmung zu erhalten, in welcher ein Aluminiumhydroxid-Feststoff in einer Menge von etwa 10 Gew.-% bis etwa 90 Gew.-%, bezogen auf das rohe Aluminiumhydroxid, das für das Mischen verwendet werden soll, vorhanden ist;
(iii) Abkühlen der Aufschlämmung, um ein Aluminiumhydroxid auszufällen; und
(iv) Trennen des erhaltenen Aluminiumhydroxids von der Aufschlämmung.

2. Verfahren zur Herstellung eines Aluminiumhydroxids gemäß Anspruch 1, wobei das Erwärmen bei einer Temperatur von nicht niedriger als 80°C und nicht höher als dem Siedepunkt der Alkalilösung durchgeführt wird.

3. Verfahren zur Herstellung eines Aluminiumhydroxids gemäß Anspruch 1 oder 2, wobei die Alkalilösung eine Konzentration an Natriumverbindungen, ausgedrückt als Na₂O, von 100 bis 200 g/l, eine Konzentration an Aluminiumoxidverbindungen, ausgedrückt als Al₂O₃, von 40 bis 132 g/l und ein Molverhältnis (Na₂O/Al₂O₃) von 2,5 bis 4 aufweist.

## Revendications

1. Procédé pour produire un hydroxyde d'aluminium, le procédé comprenant :
(i) le mélange d'un hydroxyde d'aluminium brut avec une solution alcaline qui contient une solution d'hydroxyde de sodium ou une solution d'aluminate de sodium pour qu'on obtienne un mélange de deux-ci ;
(ii) le chauffage du mélange pour obtenir une bouillie dans laquelle un extrait sec d'hydroxyde d'aluminium est présent en une quantité allant d'environ 10 % en poids à environ 90 % en poids par rapport à l'hydroxyde d'aluminium brut devant être utilisé pour le mélange ;
(iii)le refroidissement de la bouillie pour précipiter un hydroxyde d'aluminium ; et
(iv) la séparation de l'hydroxyde d'aluminium résultant à partir de la bouillie.

2. Procédé pour produire un hydroxyde d'aluminium selon la revendication 1, dans lequel le chauffage est mis en oeuvre à une température non inférieure à 80°C et non supérieure au point d'ébullition de la solution alcaline.

3. Procédé pour produire un hydroxyde d'aluminium selon la revendication 1 ou 2, dans lequel la solution alcaline a une concentration de composés du sodium, en termes de Na₂O, de 100 à 200 g/l, une concentration de composés de l'alumine, en termes de Al₂O₃, de 40 à 132 g/l, et un rapport en moles (Na₂O/Al₂O₃) de 2, 5 à 4.
